# EUROPÄISCHE PATENTSCHRIFT

(11) **EP 1 862 734 B1**
(45) Veröffentlichungstag und Bekanntmachung des Hinweises auf die Patenterteilung: **21.09.2011**
(21) Anmeldenummer: 06125205.2
(22) Anmeldetag: 01.12.2006
(51) Int. Cl.: F22B 1/28

(54) **Dampferzeuger**
Steam generator
Générateur de vapeur

(30) Priorität: 07.12.2005 DE 102005058592
(43) Veröffentlichungstag der Anmeldung: 05.12.2007
(73) Patentinhaber: MIWE Michael Wenz GmbH, 97450 Arnstein (DE)
(72) Erfinder: Frings, Thomas, 53520 Schuld (DE)
(74) Vertreter: Patentanwälte Freischem

(56) Entgegenhaltungen:
- EP-A1- 0 597 748
- WO-A-91/17661
- DE-A1- 3 103 529
- GB-A- 742 600

## Beschreibung

### Technisches Gebiet

Die Erfindung betrifft einen Dampferzeuger mit einer Verdampfungskammer, in der mindestens eine Heizvorrichtung, ein Wärmespeicherkörper und eine Wasserzufuhreinrichtung angeordnet sind, wobei der Wärmespeicherkörper aus einer Vielzahl kleiner Elemente besteht.

Ein solcher Dampferzeuger ist in WO91/17661 offenbart.

### Stand der Technik

Derartige Dampferzeuger werden bei der Behandlung von Lebensmitteln eingesetzt. Beispielsweise in der Backtechnik werden Backkammern von Backöfen beschwadet, d.h. es wird den Backkammern ein kontrollierter Dampfstrom zugeführt, der ein Austrocknen der Backwaren vermeidet. Auch Gärräume für Teiglinge, die in einem späteren Backprozeß zu Backwaren verarbeitet werden, werden häufig mit Dampf versorgt, um eine Atmosphäre mit hoher Luftfeuchtigkeit zu erreichen. Allgemein bezieht sich die Erfindung auf einen Dampferzeuger, der über Dampfkanäle mit beliebigen Behandlungsräumen verbindbar ist.

Üblicherweise werden in bekannten Dampferzeugern starre Wärmespeicherkörper eingebracht. Häufig werden Baustahlstangen auf die Heizvorrichtung aufgelegt. Die Heizvorrichtung kann beispielsweise von einer Heizwendel gebildet werden, die durch elektrischen Strom, durch eine heiße Flüssigkeit wie erhitztes Thermoöl oder ein heißes Gas, das zum Beispiel bei der Verbrennung von Brennstoffen entsteht, beheizt wird. Derartige Metallstangen können eine ungünstige Wärmeverteilung aufweisen. Häufig sind sie so stark erhitzt, daß in die Verdampfungskammer zugeführtes Wasser augenblicklich auf deren Oberfläche verdampft und der entstehende Wasserdampf eine Trennschicht zwischen der metallischen Oberfläche und dem Wassertropfen bildet. Außerdem ist es relativ mühsam, die Verdampfungskammer mit den einzelnen starren Wärmespeicherkörpern zu befüllen. Schließlich ist eine vollständige Befüllung nur insoweit möglich, als die Kontur der Wärmespeicherkörper in die Kontur der Backkammer einfügbar ist.

Bei anderen Ausführungsformen werden längliche Metallprofile im Bereich der Heizvorrichtung angeordnet. Diese Profile können Rippen aufweisen, um ihre mit Wasser in Kontakt bringbare Oberfläche zu Vergrößern. Die Länge der starren Profile entspricht meist der Breite der Verdampfungskammer, so daß auch hier die oben beschriebenen Nachteile auftreten.

Andere Dampferzeuger sind aus den Druckschriften DE 31 03 529 A1 und EP 0 534 809 B1 bekannt. Hier bestehen die Wärmespeicherkörper aus verformbarem Material. Im Fall der DE 31 03 529 A1 ist der Wärmespeicherkörper als länglicher Stab mit Stahlborsten, als Stahlschwamm oder als mit einem Drahtgeflecht oder einem Drahtgewebe umwickelter Korb ausgebildet. Bei den Wärmespeicherkörpern mit starrem Stab oder Korb und flexiblen Borsten oder Geweben ergeben sich im Falle großer Dampferzeuger ähnliche Handhabungsprobleme wie bei den oben beschriebenen Dampferzeugern mit vollständig starren Wärmespeicherkörpern. Bestehen die Wärmespeicherkörper vollständig aus flexibel verformbarem Material (z.B. Stahlschwamm), ist die Handhabung vereinfacht. Es besteht aber die Gefahr, daß der Wärmespeicherkörper lokal so stark zusammengedrückt und verdichtet wird, daß ein Hindurchtreten von Wasser behindert wird. Dies reduziert den Wirkungsgrad bei der Dampferzeugung. Außerdem sind flexibel verformbare Materialien aus Metall nicht beliebig oft verformbar, so daß derartige Wärmespeicherkörper nur selten aus der Verdampfungskammer entfernt und unter neuer Verformung wieder eingefüllt werden können. Wenn bei Wartungsarbeiten die Wärmespeicherkörper entnommen werden müssen, müssen in der Regel anschließend neue Wärmespeicherkörper eingefüllt werden.

Die Druckschriften DE 1 146 602 und EP 0 597 748 beschreiben Dampferzeuger, deren Wärmespeicherkörper von in die Verdampfungskammer eingeschüttetem Material, z.B. in Kugelform gebildet werden. Die Handhabung dieser Einzelpartikel, welche den Wärmespeicherkörper bilden, beim Einfüllen in die Verdampfungskammer und insbesondere bei der Entnahme und dem Wiedereinfüllen während Wartungsarbeiten ist sehr mühlsam und aufwendig. Es besteht die Gefahr, daß einige der Einzelpartikel herunterfallen und verlorengehen oder den Ort, an dem die Handhabung erfolgt, verunreinigen.

### Darstellung der Erfindung

Aufgabe der Erfindung ist es, einen Dampferzeuger mit einem Wärmespeicherkörper zu schaffen, der einfach handhabbar und vorteilhaft bei der Dampferzeugung ist.

Diese Aufgabe wird erfindungsgemäß dadurch gelöst, daß die kleinen Elemente des Wärmespeicherkörpers beweglich miteinander verbunden sind.

Insbesondere wird eine metallische Gliederkette als Wärmespeicherkörper vorgeschlagen. Die Elemente des Wärmespeicherkörpers können aber auch von gelenkig miteinander verbundene Kugelkörpern oder über Verbindungsringe aneinander gekoppelten Blechteile, z.B. aus geschreddertem Blech, gebildet werden.

Ein derartiger Wärmespeicherkörper ist bei der Befüllung der Verdampfungskammer leicht zu handhaben. Der kettenförmige Wärmespeicherkörper wird üblicherweise auf einer Trommel aufgewickelt angeliefert und kann zum Einfüllen in die Verdampfungskammer einfach von der Trommel abgewickelt und in die Kammer eingeführt werden. Hierbei ergibt sich eine gleichmäßige Einfüllung der einzelnen, beweglich miteinander verbundenen Elemente des Wärmespeicherkörpers in die Verdampfungskammer. Es entsteht innerhalb der Verdampfungskammer zwischen den starren Elementen des Wärmespeicherkörpers (meist Kettenglieder) ein Labyrinth, durch das sich das zugeführte Wasser aufgrund der Schwerkraft bewegen kann. Hierbei werden die kleinen Elemente, die der Wasserzufuhreinrichtung am nächsten liegen, stark abgekühlt, so daß sie keine schlagartige Verdampfung des Wassers bewirken. Das in die Verdampfungskammer eingefüllte Wasser verdampft somit gleichförmig und ermöglicht eine gleichmäßige Dampferzeugung.

Zudem kann aufgrund der gelenkig miteinander verbundenen Elemente des Wärmespeicherkörpers die Verdampfungskammer im wesentlichen vollständig mit dem Material des Wärmespeicherkörpers befüllt werden. Eine größere Materialaufnahme hat unweigerlich eine größere Wärmespeicherkapazität zur Folge. Dies führt bei gleicher Heizleistung zu einer Steigerung der möglichen Verdampfungsmenge bei gleicher Größe der Verdampfungskammer im Vergleich zu den Vorrichtungen des Standes der Technik.

Der erfindungsgemäße Dampferzeuger kann in der Praxis für die Dampfzufuhr zu einem Behandlungsraum für Lebensmittel verwendet werden. Dabei ist die Verdampfungskammer mit dem Behandlungsraum über Dampfkanäle verbunden. In einer praktischen Ausführungsform kann der Behandlungsraum eine Backkammer eines Backofens sein.

Die Elemente des Wärmespeicherkörpers bestehen vorzugsweise aus Metall, insbesondere aus Eisen oder Stahl. Eisen und Stahl weisen eine recht hohe Wärmespeicherkapazität auf, sind robust und recht unempfindliche gegen Korrosion bei den in der Verdampfungskammer herrschenden Temperaturen und preisgünstig in der Herstellung. Insbesondere Gliederketten aus Eisen oder Stahl werden in großen Mengen hergestellt und können für die Verwendung bei einem erfindungsgemäßen Dampferzeuger kostengünstig erworben werden. Je nach Einsatzzweck können aber auch andere hitzefeste Materialien wie z.B. Aluminium verwendet werden.

Die Wasserzufuhreinrichtung kann in der Praxis von mindestens einem Einspritzrohr gebildet werden. Grundsätzlich ist aber jede mit einer Wasserzufuhrleitung verbundene Öffnung, die in die Verdampfungskammer mündet, als Wasserzufuhrvorrichtung geeignet.

Ebenfalls können beliebige Heizvorrichtungen verwendet werden, beispielsweise Heizwendeln, Heizschlangen oder Heizplatten. Die Beheizung der Heizvorrichtung kann auch auf beliebige Weise erfolgen. In der Praxis haben sich beispielsweise eine Beheizung durch elektrischen Strom, durch heiße Flüssigkeit wie erhitztes Thermoöl oder durch erhitzte Rauchgase, die durch Verbrennung eines Brennstoffs entstehen, bewährt.

Die Erfindung betrifft ebenfalls eine Vorrichtung mit einem Behandlungsraum, welcher einen Dampferzeuger der oben beschriebenen Art aufweist, der mit dem Behandlungsraum über mindestens einen Dampfkanal verbunden ist. Dabei kann der Behandlungsraum insbesondere der Behandlung von Lebensmitteln dienen und beispielsweise eine Backkammer sein.

### Kurze Beschreibung der Zeichnungen

Ein Ausführungsbeispiel der Erfindung wird nachfolgend unter Bezugnahme auf die beigefügten Zeichnungen erläutert. Die Zeichnungen zeigen in:
- Fig. 1: eine schematische Seitenansicht eines Backofens mit einem erfindungsgemäßen Dampferzeuger und
- Fig. 2: eine in der Ebene II-II geschnittene Ansicht der Verdampfungskammer des Backofens aus Fig. 1.

### Weg(e) zur Ausführung der Erfindung

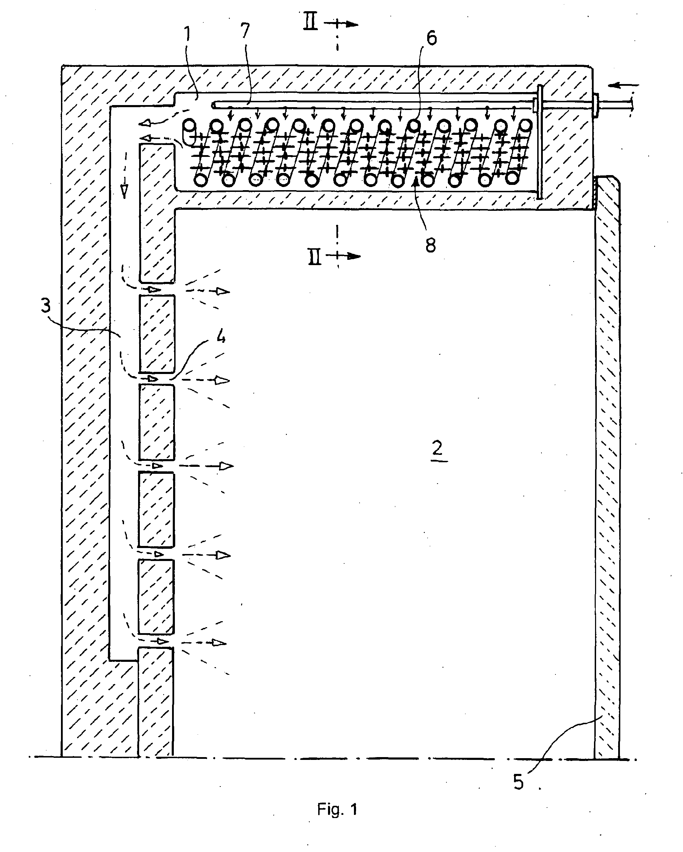

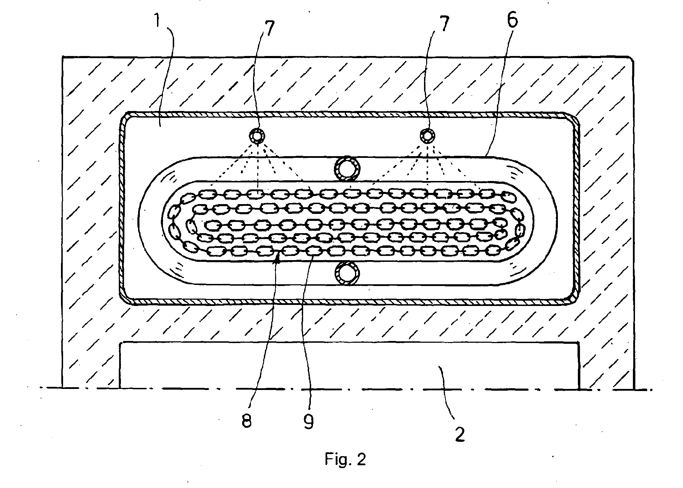

Der in den Fig. 1 und 2 dargestellte Backofen umfaßt im oberen Bereich eine Verdampfungskammer 1 und im unteren Bereich eine Backkammer 2, die den Behandlungsraum für die zu backenden Lebensmittel bildet. Die Mittel zur Beheizung der Backkammer 2 sind nicht dargestellt. Die Verdampfungskammer 1 ist mit der Backkammer 2 über einen Dampfkanal 3 verbunden, der zu einer Vielzahl von Öffnungen 4 in der an den Dampfkanal 3 grenzenden Wand der Backkammer 2 führt. Die Backkammer 2 ist durch eine Tür 5 verschließbar.

Innerhalb der Verdampfungskammer 1 ist eine Heizwendel 6 angeordnet, welche von einem hohlen Metallrohr gebildet wird, das von einem Heizmedium wie beispielsweise einem Thermoöl oder einem Rauchgas durchströmt wird. Insbesondere die Fig. 2 zeigt, daß die Heizwendel 6 innerhalb der Verdampfungskammer 1 in Form einer flachen Wendel angeordnet ist.

Oberhalb der Heizwendel 6 befinden sich zwei Einspritzrohre 7, welche die Zufuhreinrichtung für Wasser in die Verdampfungskammer 1 bilden. Innerhalb der Heizwendel 6 ist eine Kette 8 angeordnet, die als Wärmespeicherkörper wirkt. Die Kette 8 besteht aus einzelnen Kettengliedern 9, welche die beweglich miteinander verbundenen Elemente des als Kette 8 ausgebildeten Wärmespeicherkörpers bilden. Die einzelnen Kettenglieder 9 bestehen in der Regel aus Stahl und sind beweglich miteinander verbunden.

So ist es möglich, mit den beweglichen Kettengliedern 9 das gesamte, von der Heizwendel 6 umfaßte Volumen auszufüllen. Erforderlichenfalls kann auch das außerhalb der Heizwendel 6 von den Wänden der Verdampfungskammer 1 umfaßte Volumen mit der Kette 8 ausgefüllt werden.

Die Einspritzrohre 7 spritzen Wasser auf die Kette 8 und auf die Heizwendel 6. Wenn es unerwünscht ist, daß das Wasser direkt auf die Heizwendel 6 gelangt, können die Einspritzrohre 7 so ausgebildet werden, daß sie Wasser nur in die Lücken zwischen zwei Rohrabschnitten der Heizwendel 6 sprühen. Das aufgesprühte Wasser verdampft aufgrund der Wärmeübertragung von den Kettengliedern 9. Wenn im oberen Bereich die Kettenglieder 9 zu weit abgekühlt sind, um ein Verdampfen des Wassers zu bewirken, kann das Wasser an der Oberfläche der Kettenglieder 9 durch die Schwerkraft nach unten laufen und auf wärmere Kettenglieder treffen, die eine Verdampfung des Wassers bewirken können.

Es ist zu erkennen, daß die Ausbildung des Wärmespeicherkörpers 8 als Kette eine Vielzahl von Vorteilen aufweist. Die Kette 8 kann leicht und schnell in die Verdampfungskammer 1 eingefüllt und auch wieder herausgenommen werden. Außerhalb der Verdampfungskammer 1 kann sie sinnvollerweise auf eine Wickeltrommel (nicht dargestellt) aufgewickelt werden. Die Kette 8 erlaubt eine vollständige Befüllung des Volumens der Verdampfungskammer 1.

Die beweglich miteinander verbundenen Glieder 9 der Kette 8 bilden innerhalb der Verdampfungskammer 1 ein Labyrinth, durch welches eingespritztes Wasser nach unten rieselt, wobei es verdampft.

Bezugszeichenliste:
- 1: Verdampfungskammer
- 2: Behandlungsraum für Lebensmittel, Backkammer
- 3: Dampfkanal
- 4: Öffnung
- 5: Tür
- 6: Heizvorrichtung, Heizwendel
- 7: Wasserzufuhreinrichtung, Einspritzrohr
- 8: Wärmespeicherkörper, Kette
- 9: Element, Kettenglied

## Patentansprüche

1. Dampferzeuger mit einer Verdampfungskammer (1), in der mindestens eine Heizvorrichtung (6), ein Wärmespeicherkörper (8) und eine Wasserzufuhreinrichtung (7) angeordnet sind, wobei der Wärmespeicherkörper (8) aus einer Vielzahl kleiner Elemente (9) besteht, **dadurch gekennzeichnet, daß** die kleinen Elemente (9) des Wärmespeicherkörpers (8) beweglich miteinander verbunden sind.

2. Dampferzeuger nach Anspruch 1, **dadurch gekennzeichnet, daß** die Verdampfungskammer (1) über mindestens einen Dampfkanal (3) mit einem Behandlungsraum (2) für Lebensmittel verbunden ist.

3. Dampferzeuger nach Anspruch 2, **dadurch gekennzeichnet, daß** der Behandlungsraum eine Backkammer (2) eines Backofens ist.

4. Dampferzeuger nach einem der vorangehenden Ansprüche, **dadurch gekennzeichnet, daß** die Elemente des Wärmespeicherkörpers einander durchragende Glieder (9) einer Kette (8) sind.

5. Dampferzeuger nach einem der vorangehenden Ansprüche, **dadurch gekennzeichnet, daß** die Elemente (9) aus Eisen oder Stahl bestehen.

6. Dampferzeuger nach einem der vorangehenden Ansprüche, **dadurch gekennzeichnet, daß** die Wasserzufuhreinrichtung von mindestens einem Einspritzrohr (7) gebildet wird.

7. Dampferzeuger nach einem der vorangehenden Ansprüche, **dadurch gekennzeichnet, daß** die Heizvorrichtung von einer Heizwendel (6) oder einer Heizschlange gebildet wird.

8. Dampferzeuger nach einem der vorangehenden Ansprüche, **dadurch gekennzeichnet, daß** die Heizvorrichtung eine beheizbare Platte umfaßt.

9. Dampferzeuger nach einem der vorangehenden Ansprüche, **dadurch gekennzeichnet, daß** der Heizvorrichtung (6) durch mindestens einen der folgenden Energieträger Wärmeenergie zugeführt wird:
- elektrischer Strom,
- heiße Flüssigkeit, insbesondere erhitztes Thermoöl,
- heißes Gas, insbesondere bei einer Verbrennung erzeugtes Rauchgas.

10. Vorrichtung mit einem Behandlungsraum (2), **gekennzeichnet durch** einen Dampferzeuger nach einem der vorangehenden Ansprüche, der mit dem Behandlungsraum (2) über mindestens einen Dampfkanal (3) verbunden ist.

11. Vorrichtung nach Anspruch 10, **dadurch gekennzeichnet, daß** der Behandlungsraum (2) zur Behandlung von Lebensmitteln bestimmt ist.

12. Vorrichtung nach Anspruch 11, **dadurch gekennzeichnet, daß** der Behandlungsraum eine Backkammer (2) ist.

## Claims

1. Steam generator comprising a vaporisation chamber (1) In which there are arranged at least one heating device (6), a heat storage body (8) and a water feed device (7), wherein the heat storage body (8) consists of a plurality of small elements (9), **characterised in that** the small elements (9) of the heat storage body (8) are movably connected together.

2. Steam generator according to claim 1, **characterised in that** the vaporisation chamber (1) is connected by way of at least one steam passage (3) to a treatment chamber (2) for foodstuffs.

3. Steam generator according to claim 2, **characterised in that** the treatment chamber is a baking chamber (2) of a baking oven.

4. Steam generator according to one of the preceding claims, **characterised in that** the elements of the heat storage body are links (9) of a chain (8), which links project through each other.

5. Steam generator according to one of the preceding claims, **characterised in that** the elements (9) consist of iron or steel.

6. Steam generator according to one of the preceding claims, **characterised in that** the water feed device is formed by at least one injection pipe (7).

7. Steam generator according to one of the preceding claims, **characterised in that** the heating device is formed by a heating coil (6) or a heating spiral.

8. Steam generator according to one of the preceding claims, **characterised in that** the heating device includes a heatable plate.

9. Steam generator according to one of the preceding claims, **characterised in that** heat energy is fed to the heating device (6) by at least one of the following energy carriers:
- electric current,
- hot liquid, in particular heated thermal oil,
- hot gas, in particular flue gas produced upon combustion.

10. Apparatus comprising a treatment chamber (2), **characterised by** a steam generator according to one of the preceding claims, which is connected to the treatment chamber (2) by way of at least one steam passage (3).

11. Apparatus according to claim 10, **characterised in that** the treatment chamber (2) is intended for the treatment of foodstuffs.

12. Apparatus according to claim 11, **characterised in that** the treatment chamber is a baking chamber (2).

## Revendications

1. Générateur de vapeur avec une chambre de vaporisation (1), dans laquelle sont disposés au moins un dispositif de chauffage (6), un corps de stockage de chaleur (8) et un dispositif d'approvisionnement en eau (7), le corps de stockage de chaleur (8) étant constitué à partir d'un grand nombre de petits éléments (9), **caractérisé en ce que** les petits éléments (9) du corps de stockage de chaleur (8) sont reliés de façon mobile l'un à l'autre.

2. Générateur de vapeur selon la revendication 1, **caractérisé par le fait que** la chambre de vaporisation est reliée par au moins un canal de vapeur (3) avec une chambre de traitement (2) pour de la nourriture.

3. Générateur de vapeur selon la revendication 2, **caractérisé par le fait que** la chambre de traitement est une chambre de cuisson (2) d'un four.

4. Générateur de vapeur selon l'une des revendications précédentes, **caractérisé en ce que** les éléments du corps de stockage de chaleur sont reliés l'un à l'autre par les maillons (9) d'une chaîne (8).

5. Générateur de vapeur selon l'une des revendications précédentes, **caractérisée par le fait que** les éléments (9) sont en fer ou en acier.

6. Générateur de vapeur selon l'une des revendications précédentes, **caractérisé en ce que** les moyens l'approvisionnement en eau sont constitués d'au moins un tuyau d'injection (7).

7. Générateur de vapeur selon l'une des revendications précédentes, **caractérisé en ce que** le dispositif de chauffage est constitué par un serpentin de chauffage (6) ou par une bobine chauffante.

8. Générateur de vapeur selon l'une des revendications précédentes, **caractérisé en ce que** le dispositif de chauffage comprend une plaque chauffante.

9. Générateur de vapeur selon l'une des revendications précédentes, **caractérisé en ce que** le dispositif de chauffage (6) est alimenté par au moins une des source d'énergie suivantes:
- le courant électrique,
- du liquide chaud, en particulier de l'huile thermique chauffée,
- du gaz chaud, en particulier un gaz de issu d'un produit de combustion.

10. Appareil avec une chambre de traitement (2), **caractérisé par** un générateur de vapeur selon l'une des revendications précédentes qui est connecté à la chambre de traitement (2) par au moins un canal de vapeur (3).

11. Appareil selon la revendication 10, **caractérisé en ce que** la chambre de traitement (2) pour le traitement des denrées alimentaires est déterminée.

12. Appareil selon revendication 11, **caractérisé en ce que**, la chambre de traitement est une chambre de cuisson (2).
